# EUROPEAN PATENT APPLICATION

(11) **EP 1 946 902 A2**
(43) Date of publication of application: **23.07.2008**
(21) Application number: 08000674.5
(22) Date of filing: 15.01.2008
(51) Int. Cl.: B29C 45/16, A63B 53/14

(54) **Liquid injection molded hand grips**

(30) Priority: 19.01.2007 US 655462
(71) Applicant: Eaton Corporation, Cleveland, Ohio 44114-2584 (US)
(72) Inventor: Gill, David, Pinehurst, NC 28374 (US); Turnpaugh, Dennis, Laurinburg, NC 28352 (US); Norton, Bruce, Laurinburg, NC 28352 (US); Murdock, Donald, Ellerbe, NC 28338 (US)
(74) Representative: Wagner, Karl H.

(57) **Abstract**

A grip for a golf club is provided. The grip comprises a liquid injection molded elongated flexible sleeve (10) that slips onto the shaft of a golf club and a liquid injection molded layer (30) of material surrounding the sleeve and integrally bonded to the sleeve. The golf club grip comprises at least one type of silicone material.

## Description

### 1. FIELD

The present disclosure relates in general to a hand grip or a sports grip, and more particularly to new and improved hand grips manufactured with a liquid injection molding process particularly suited as grips for shock imparting implements.

### 2. BACKGROUND.

There are many forms of grips available on the market today for a wide variety of implements. These implements can range from hammer handles or other hand tools to sports implements like tennis, squash, or racquetball rackets, or golf clubs. While the present invention is particularly suited as a golf club grip and described with reference thereto, it should be immediately apparent that the present invention is not intended to be limited only to golf grips and extends to any sports grip or hand grip for a shock imparting implement.

Originally, golf club grips consisted primarily of a leather wrap around a handle. Later, molded rubber grips became available and are still in wide use today. A recent variation on the molded rubber grip is the concept of using a rubber sleeve or underlisting on the handle with leather or synthetic leather wrap spirally wrapped around the underlisting for a softer hand feel. Grips are made today from a wide variety and combination of materials.

Silicone is often used commercially today as a substitute for natural rubber products. The term silicone as employed herein is meant to include but not be limited to silicone rubber and the various silicone elastomers made from the different polyorganosiloxanes, cure mechanisms, and fillers that are commercially available. Silicone has advantageous properties over natural rubber with respect to durability, flexibility over a wide temperature range and resistance to ozone and ultraviolet attack as well a grip feel. Because of these superior properties, some grip manufacturers are manufacturing grips formed from silicone. Unfortunately, silicone can be a somewhat difficult material to work with particularly for forming suitable grips for tools and sporting implements.

There still exists a need for an improved silicone grip that imparts or receives shock or force to or from a shock imparting implement. The grip should provide a firm grasp with little or no slippage, good grip feel, and good resistance to torque as well as good shock absorbing qualities.

### BRIEF SUMMARY OF THE DISCLOSURE

The subject disclosure provides a liquid injection molding process ("LIM") for forming a hand grip. While the liquid injection molding process of the present disclosure is particularly suited for manufacturing silicone hand grips, other materials such as natural and synthetic rubber or other thermoplastic elastomers may also be employed with the disclosed liquid injection molding process. The hand grip can be formed with a single durometer value, or alternatively with at least two durometer values, if desired, for providing a grip with good grip feel and torsional resistance.

A grip for a shock imparting implement comprising a liquid injection molded elongated flexible sleeve constructed to slide on a shaft of the shock imparting implement, and a liquid injection molded outer layer of material covering the sleeve.

The various features of novelty which characterize the present disclosure are pointed out with particularity in the claims annexed to and forming a part of this disclosure. For a better understanding and its operating advantages attained with its use, reference is made to the accompanying drawings, and descriptive matter.

### BRIEF DESCRIPTION OF THE DRAWINGS

Fig. 1 is a perspective view of a flexible sleeve or underlisting for a golf club grip according to some embodiments of the present disclosure.

Fig. 2 is a side elevational view of the flexible sleeve of Fig. 1.

Fig. 3 is a cross-sectional view of the sleeve of Fig. 1 taken along Lines 3-3.

Fig. 4 is a cross-sectional view of the sleeve of Fig. 2 taken along Lines 4-4.

Fig. 5 is a cross-sectional view of the sleeve of Fig. 2 taken along Lines 5-5.

Fig. 6 is a perspective view of a golf club grip according to some embodiments of the present invention.

Fig. 7 is a rear elevational view of the golf club grip of Fig. 6.

Fig. 8 is a cross-sectional view of the golf club grip of Fig. 6 taken along Lines 8-8.

Fig. 9 is a view similar to Fig. 8 of another embodiment.

Fig. 10 is a block diagram depicting the liquid injection method steps of the subject disclosure.

Fig. 11 is a schematic illustration of the liquid injection molding apparatus according to the subject disclosure.

Fig. 12 is a perspective view of a sheet of material formed as an overmold layer.

Fig. 13 is a view similar to Fig. 8 of another embodiment according to the present disclosure.

### DETAILED DESCRIPTION OF THE DISCLOSURE

The present disclosure now is described more fully hereinafter with reference to the accompanying drawings, in which preferred embodiments of the invention are shown. This invention may, however, be embodied in many different-forms and should not be construed as limited to the embodiments set forth herein; rather, these embodiments are provided so that this disclosure will be thorough and complete, and will fully convey the scope of the invention to those skilled in the art.

Like numbers refer to like elements throughout. In the figures, the thickness of certain lines, layers, components, elements or features may be exaggerated for clarity. Broken lines illustrate optional features or operations unless specified otherwise. All publications, patent applications, patents, and other references mentioned herein are incorporated herein by reference in their entireties.

Even though embodiments of the present invention are particularly suited for use as golf club grips and reference is made specifically thereto, it should be immediately apparent that embodiments of the present invention are applicable to any device or article requiring the use of a hand grip, for example, tools, ski poles, racquets, and the like.

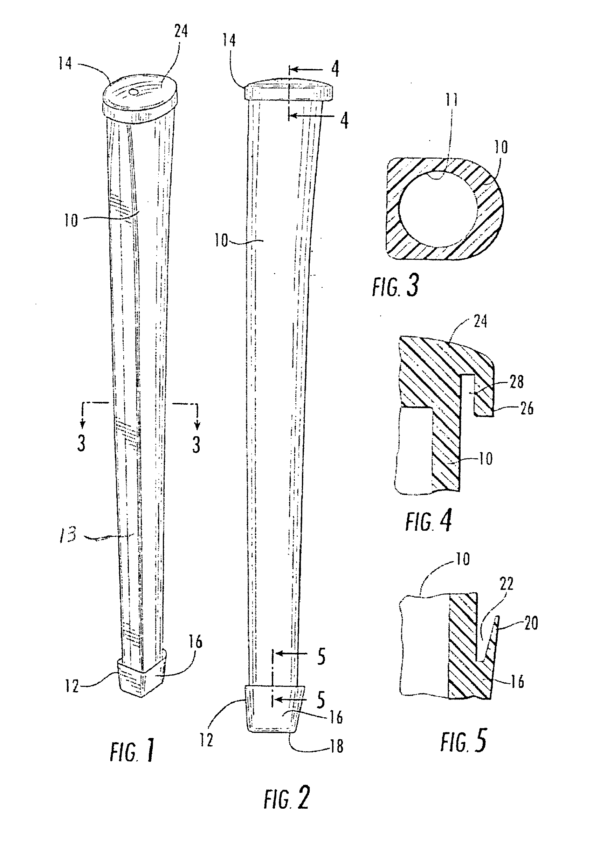

Referring initially to Figs. 1-5, an elongated flexible sleeve 10 or underlisting for a grip that is configured to slip onto and be secured to a golf club shaft, according to embodiments of the present invention, is illustrated. The sleeve or underlisting 10 has an internal passageway 11 configured to receive a golf club shaft. The illustrated sleeve 10 is for a putter and has a generally flat, elongated front wall portion 13 and a tapered configuration wherein a lower end (proximal end) 12 has a circumference that is smaller than a circumference of the upper (distal) end 14. However, golf club grips according to some embodiments of the present invention may be designed for virtually any type of golf club, namely both putters and so-called "swing grips" for irons and woods. As such, sleeves according to embodiments of the present invention may have various shapes and configurations depending on the type of golf club on which the sleeve is to be attached.

The illustrated sleeve 10 is formed from a resilient polymeric material such as, for example, silicone, natural rubber, synthetic rubber, polyurethane, thermoplastic elastomers, thermoplastic rubbers, fluorosilicone, Santoprene, or Kraton compounds etc. In one embodiment, the sleeve is a silicone rubber commercially available from GE Silicones, Dow Corning, Wacker Silicone, Rhodia Silicone, for example. Moreover, the sleeve 10 may comprise a "dual-durometer" material wherein hardness of the sleeve material is different or even is different at different portions of the sleeve, or even still have an overmold or cover layer with a different hardness value. As is known to those skilled in the art, a durometer is an international standard for the hardness measurement of rubber, plastic and other non-metallic materials. Durometers are described in the American Society for Testing and Material specification ASTM D2240. In one embodiment, the sleeve may have a hardness range of about 50 to 70 Durometer Shore A.

The illustrated sleeve 10 includes a proximal end 12 and an opposite distal end 14. A nipple 16 is located at the proximal end 12. The nipple 16 includes an aperture 18 in communication with passageway 11 and through which a golf club shaft is inserted. The illustrated nipple 16 has a tapered outer peripheral wall portion 20 that is spaced apart from the body of the nipple 16 and that defines an optional upwardly facing circumferential slot 22. A cap 24 is located at the distal end 14 and has an outer peripheral wall portion 26 that is spaced apart from the body of the cap 24. The outer peripheral wall portion 26 defines an optional downwardly facing circumferential slot 28, as illustrated. Embodiments of the present invention, however, are not limited to the illustrated sleeve 10. As one example, slots 22, 28 are optional features to the grip according to the present disclosure.

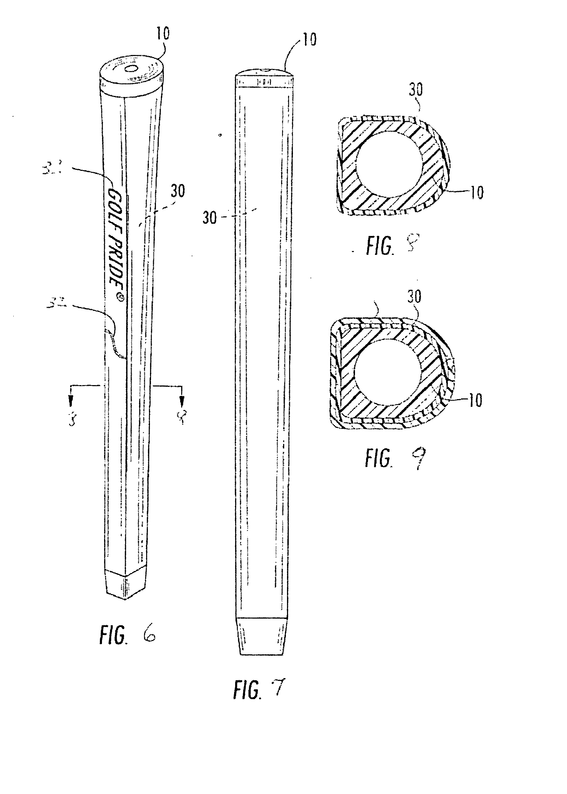

Compression molding methods typically place flexible panels on the sleeve 10. The panels as known in the art can have any shape and configuration depending upon the shape and configuration of a sleeve around which they are to be wrapped and bonded. According to one embodiment of the present disclosure as seen in Fig. 8, at least one layer 30 of an elastomeric material, as previously mentioned, having a selected durometer value and being approximately 0.002 to approximately 0.100 inches is overmolded around the sleeve 10 using a liquid injection molding process as described later herein in greater detail. The overmolded layer 30 may have a hardness range of about 5 to 70 Durometer Shore A. One embodiment of the grip of the present disclosure includes one layer 30. Other embodiments of the present disclosure include providing two or more layers 30, 31 with a durometer value selected within the range of about 5 to about 70 Durometer Shore A depending upon a desired grip feel.

According to some embodiments of the present disclosure, an outer layer 30 may be smooth or may contain designs, patterns, or impressions formed or printed therein. It should be immediately apparent that the flexible sleeve 10 may separately include designs, patterns, or impressions printed or formed thereon. According to some embodiments of the present disclosure, layer 30 may be clear or may have one or more colors and/or graphics, designs, or patterns thereon.

Referring now to Figure 6, indicia 32 has been applied to a surface of the outer layer 30. The indicia 32 is formed by applying a suitable ink in any of various methods such as, for example, screen printing. Suitable ink components are commercially available from multiple sources, including but not limited to Rhodia Silicone, Dow Corning, Novagard, and GE Silicones. The printed indicia may be designs, words, symbols, graphics, etc.

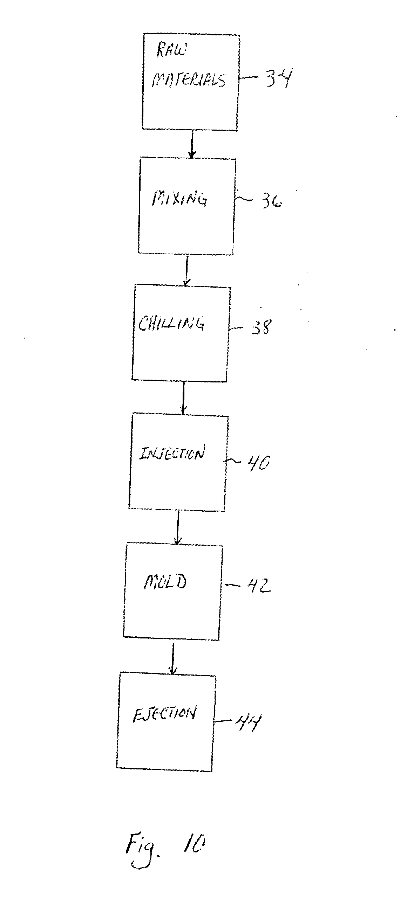

Referring now to Figure 10, there is shown in block diagram the steps involved in the liquid injection molding process according to the present disclosure. The raw materials 34, typically two parts referred to as part "A" 46 and part "B" 48 of the silicone elastomer material, in a benign state, are mixed 36 at a typical ratio of 1:1, and then transferred to the injection step 40 via a chilling step 38 in the molding process. During each cycle of the molding process a metered amount of LSR is injected 40 into a heated molding step 42, at the end of a pre-determined time, where the LSR is vulcanized (cured) into the finished part which is then ejected 44 from the mold process. While this process appears in simple block form, it can be a very complex process depending upon many variables including but not limited to polymer composition, temperatures, pressures, injection speeds (rates), and the shape of the molded products as well as other factors.

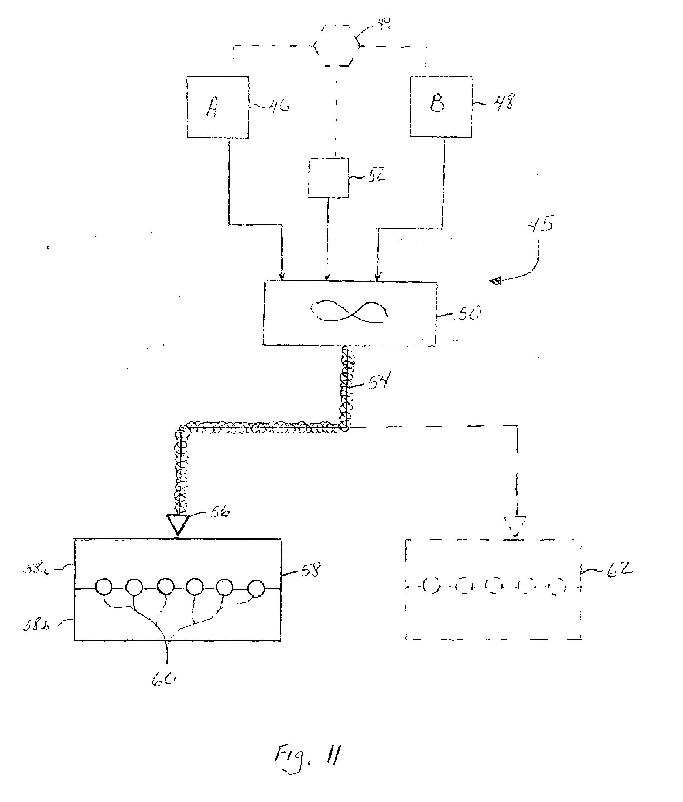

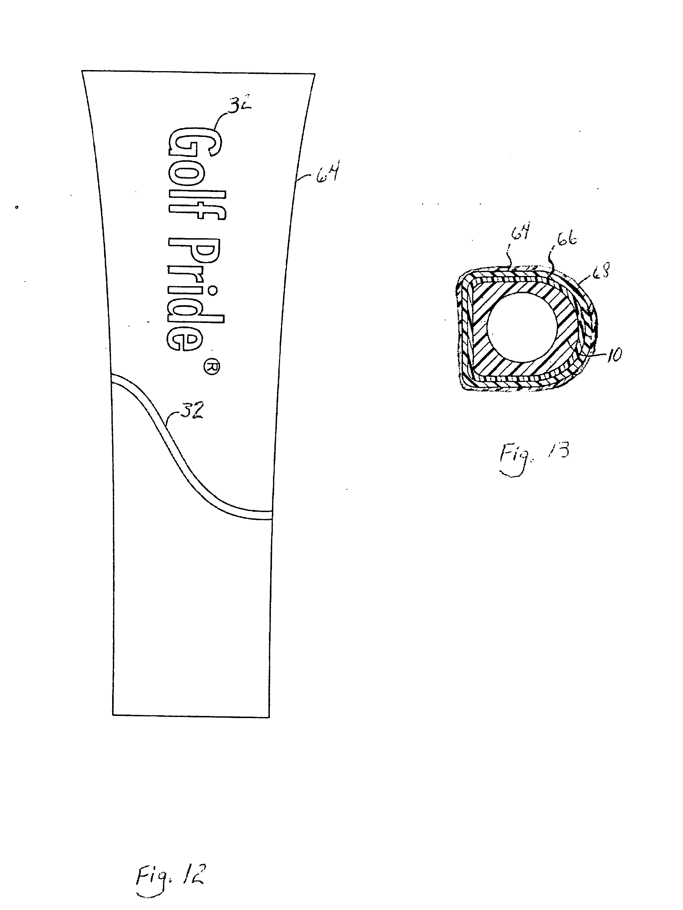

Referring now to Figure 11, the process is described in more detail with respect to the molding system schematically illustrated and generally designated 45. The raw materials 34 referred to as part "A" designated as 46 and part "B" designated as 48 are homogenously mixed in mixer 50 at a typical ratio of 1:1. When desired, a color additive 52 is added on a volumetric percentage of approximately 0.5% up to approximately 6% depending upon the desired color. This mixture is transferred through a cooled delivery channel 54 to an injection nozzle 56 where it is injected in selected portions into a heated mold 58 having mold cavities 60 for forming the shapes of the desired parts. The heated mold 58 as is known in this art includes two separable portions, 58a and 58b, to allow the finished parts to be ejected from the mold. A second mold 62, similar in construction to mold 58, shown in dashed line, or even more molds (not shown) may be employed to provide a plurality of overmold layers. As should be immediately apparent, an optional microprocessor or computer control system shown in dashed lines and designated 49 may be employed to automate the steps of the process and control the various parameters used in the manufacturing process of molding system 45. An alternative to over molding the outer or first layer 30 or layers is to produce all of the components with injection molding. That is the sleeve 10, one or more layers as a sheet 64 shown in Figure 12, and then bonding the layers to the sleeve 10 with for example a room temperature vulcanization silicone adhesive 66 as seen in Figure 13. In this alternative process the indicia 32 is applied to the sheet 64 prior to bonding on the sleeve 10 using the same technique previously described herein. Optionally the "feel" and/or the "appearance" of the grip can be tailored to suit the design and functional needs of the product through the application of an additional outer coating 68 of silicone. This outermost coating 68 can be either sprayed, rolled, or applied by molding, and may be clear or matt in appearance. It can have a surface feel of very smooth, rough, or tacky as desired and depending upon formulations. Through the methods described in this disclosure grips of varying durometer, texture, composition, color, geometry, and style can be produced in a cost effective manner. There are many known techniques and silicone rubber formulations for liquid injection molding, for example, such as those that are described in U.S. Patent 5,082,886 and U.S. Patent 6,040,366, which are hereby incorporated by reference, or any other suitable liquid silicone rubber formulation, like General Electric's low-compression-set LSR called LIM 9070. The particular silicone is selected based on the desired hardness of the article upon curing, the desired cure rate, and the viscosity of the mixture of the components prior to curing. The chosen viscosity should provide good flow through the system and mold cavity to ensure that the mold cavity is properly filled. The viscosity of silicone oligomers and polymers typically range from 200,000 to 3,500,000 centipoise (cps) at 25 degrees C. injection pressures for molding LSRs can vary from approximately 200 to 15,000 psi, and vulcanization temperatures can range between 250 degrees and 400 degrees Fahrenheit.

While specific embodiments of the invention have been shown and described in detail to illustrate the application of the principles of the invention, it will be understood that the invention may be embodied otherwise without departing from such principles.

## Claims

1. A grip for a shock imparting implement, comprising:
a liquid injection molded elongated flexible sleeve constructed to slide onto a shaft of a shock imparting implement; and
a liquid injection molded first layer of a material covering said sleeve.

2. The grip of Claim 1, wherein the sleeve comprises silicone material.

3. The grip of Claim 1, wherein the first layer comprises a silicone material.

4. The grip of Claim 3, wherein the sleeve and the first layer have different durometer values.

5. The grip of Claim 1, further comprising a second liquid injection molded layer covering the first layer.

6. The grip of Claim 1, wherein the second liquid injection molded layer comprises a silicone material.

7. The grip of Claim 1, wherein the second liquid injection molded layer comprises a different durometer value than the sleeve and the first layer.

8. The grip of Claim 1, further comprising a nipple at a proximal end of the sleeve, wherein the first layer covers the sleeve except for the nipple portion of the sleeve.

9. The grip of Claim 8, further comprising a cap at a distal end of the sleeve, wherein the first layer covers the sleeve except for the cap portion and nipple portion of the sleeve.

10. A grip for a golf club, comprising:
a liquid injected molded elongated flexible sleeve of silicone material that slips onto the shaft of a golf club, wherein the sleeve comprises a proximal end and an opposite distal end; and a liquid injected overmold layer of silicone material integrally bonded to the sleeve.

11. The grip of Claim 10, further comprising a nipple at a proximal end of the sleeve, wherein the overmold layer covers the sleeve except for the nipple portion of the sleeve.

12. The grip of Claim 11, further comprising a cap at a distal end of the sleeve, wherein the overmolded layer covers the sleeve except for the cap portion and nipple portion of the sleeve.

13. The grip of Claim 10, wherein the sleeve comprises a durometer value different than the overmolded layer.

14. The grip of Claim 10, further comprising a second overmolded layer bonded to the first overmolded layer.

15. A method of forming a grip for a golf club, the method comprising the steps of:
liquid injection molding a flexible sleeve constructed to slide on to a shaft of a golf club; and
liquid injection molding at least one overmold layer onto the sleeve in a selected location on the sleeve for forming a golf club grip.

16. The method of Claim 15, further comprising applying a second overmold layer of material onto the first overmold layer; and providing indicia on the sleeve prior to liquid injection molding of the over layer on the sleeve.

17. A method of forming a grip for a golf club, the method comprising the steps of:
liquid injection molding a flexible sleeve constructed to slide on to a shaft of a golf club;
forming at least one sheet of material as an overmold layer shaped to surround and cover the flexible sleeve in a selected location of the sleeve; and
vulcanizing the at least one sheet of material on to the sleeve in the selected location at room temperature with a silicone adhesive.

18. The method of Claim 17, wherein the selected location comprises the surface area of the sleeve between a cap portion on the sleeve at a distal end of the sleeve and a nipple portion of the sleeve situated at a proximal end of the sleeve.

19. The method of Claim 18, wherein the golf grip comprises at least one type of silicone material.
